# EUROPEAN PATENT APPLICATION

(11) **EP 1 445 501 A1**
(43) Date of publication of application: **11.08.2004**
(21) Application number: 02802044.4
(22) Date of filing: 21.10.2002
(51) Int. Cl.: F16C 11/10, H04M 1/02

(54) **HINGE DEVICE AND FOLDABLE CELL PHONE USING THE HINGE**

(30) Priority: 25.10.2001 JP 2001327453
(71) Applicant: SUGATSUNE KOGYO CO., LTD., Chiyoda-ku Tokyo 101-8633 (JP)
(72) Inventor: KOSHIKAWA, Shinichiro, SUGATSUNE KOGYO CO., LTD., Tokyo 101 -8633 (JP)
(74) Representative: Hallybone, Huw George
(86) International application number: PCT/JP2002/010892
(87) International publication number: WO 2003/036110

(57) **Abstract**

A hinge unit 10 comprises a first hinge part 20 for automatically turning a reception section from a folding position to a talking position, and a second hinge part 30 which is operated when the reception section is manually turned. A first hinge member 21 of the first hinge part 20 is non-turnably fitted to a connection cylindrical part 2b of a transmission section and a second hinge member 22 is turnably fitted to a connection cylindrical part 3c of the reception section. A first engagement member 31 of the second hinge part 30 is turnably fitted to the connection cylindrical part 3c, and a second engagement member 32 is turnably fitted to the connection cylindrical part 3c. The second hinge member 22 and the second engagement member 32 are non-turnably connected together. The force of the second hinge part 30 for holding the reception section in the folding position is set to be larger than the turn biasing force of the first hinge part 20 for turn biasing the reception section from the folding position side toward the talking position side.

## Description

### Technical Field

This invention relates to a hinge unit in which two parts such as a transmission section and a reception section of a portable cellular telephone can be turned automatically or manually, and a portable cellular telephone using the hinge unit.

### Background Technique

As a hinge unit of this type, there has heretofore been known one, which is described, for example, in Japanese Patent Application Laid-Open No. 2001-207721. This hinge unit is of the type in which a transmission section and a reception section of a cellular telephone are turnably connected between a folding position and a talking position. When a push button is pressed at the time the reception section is in the folding position where the reception section is in abutment with the transmission section, the reception section is automatically turned from the folding position to the talking position. In this hinge unit, the reception section can manually be turned from the folding position to the talking position by causing turning force of a predetermined magnitude or more to act on the reception section which is in the folding position. This hinge unit is designed such that when the reception section is turned from the folding position toward the talking position side beyond a predetermined angle (for example, 20 degrees), the reception section is automatically turned to the talking position by biasing force of the turn biasing means thereafter.

In the conventional hinge unit, there is such a problem that even in case the reception section is manually turned from the folding position toward the talking position side, when the reception section is turned from the folding position toward the talking position side beyond a predetermined angle, the reception section is automatically turned to the talking position by the biasing force of the turn biasing means and therefore, the reception section cannot be stopped, even if tried, at an optional position between a position away by a predetermined angle from the folding position and the talking position.

### Disclosure of the Invention

In order to solve the above problem, according to the first embodiment of the present invention, there is provided a hinge unit comprising a first and a second hinge part arranged, side by side, on a rotation axis, the first hinge part including a first hinge member arranged on the rotation axis, a second hinge member arranged on the rotation axis and relatively turnable between a first position and a second position with respect to the first hinge member, turn biasing means for turn biasing the second hinge member from the first position to the second position with respect to the first hinge member, lock means for locking the second hinge member to the first position, and lock releasing means for releasing the locked state caused by the lock means with respect to the second hinge member, the second hinge part including a first and a second engagement member relatively turnably arranged in mutually opposing relation on the rotation axis, first retaining means for positionally fixing the first engagement member to the first position with a predetermined retaining force, second retaining means for positionally fixing the second engagement member to the second position with a predetermined retaining force, and turn resisting means for restricting relative turning motion of the first and second engagement members between the first position and the second position with a predetermined resisting force, the second hinge member of the first hinge part and the second engagement member of the second hinge part being non-turnably connected together, and the retaining force of the first retaining means for positionally fixing the first engagement member to the first position being set to be larger than the turn biasing force of the turn biasing means with respect to the second hinge member.

In that case, it is preferable that the turn biasing means includes movable member non-turnably disposed at the second hinge member but movable in the direction of the rotation axis, a first straight movement biasing member for biasing the movable member in the direction of the rotation axis toward the first hinge member, and first conversion means for converting the biasing force of the first straight movement biasing member to a turn biasing force for turning the movable member from the first position side toward the second position side.

The first retaining means preferably includes a second straight movement biasing member for biasing the second engagement member in the direction of the rotation axis toward the first engagement member, and second conversion means for converting the turn biasing force of the second straight movement biasing means to a turn biasing force for turn biasing the first engagement member from the second position side toward the first position side when the first engagement member is located in a predetermined angle range from the first position toward the second position side.

The second retaining means preferably includes a third straight movement biasing member for biasing the second engagement member in the direction of the rotation axis toward the first engagement member, and third conversion means for converting the biasing force of the third straight movement means to a turn biasing force for turn biasing the first engagement member from the first position side toward the second position side when the first engagement member is located in a predetermined angle range from the second position toward the first position side.

It is preferable that the turn biasing means includes movable member non-turnably disposed at the second hinge member but movable in the direction of the rotation axis, a first straight movement biasing member for biasing the movable member in the direction of the rotation axis toward the first hinge member, and first conversion means for converting the biasing force of the first straight movement biasing member to a turn biasing force for turning the movable member from the first position side toward the second position side, the first retaining means includes a second straight movement biasing member for biasing the second engagement member in the direction of the rotation axis toward the first engagement member, and second conversion means for converting the biasing force of the second straight movement biasing means to a turn biasing force for turn biasing the first engagement member from the second position side toward the first position side when the first engagement member is located in a predetermined angle range from the first position toward the second position side, and the second retaining means includes third straight movement biasing member for biasing the second engagement member in the direction of the rotation axis toward the first engagement member, and third conversion means for converting the biasing force of the third straight movement means to a turn biasing force for turn biasing the first engagement member from the first position side toward the second position side when the first engagement member is located in a predetermined angle range from the second position toward the first position side, and the first straight movement biasing member, the second straight movement biasing member and the third straight movement biasing member are mutually commonly used.

In order to solve the above problem, according to the second embodiment of the present invention, there is provided a foldable portable cellular telephone in which a transmission section and a reception section are turnably connected together between a folding position and a talking position through a hinge unit, wherein the hinge unit comprises a first and a second hinge part arranged, side by side, on a rotation axis of the transmission section and the reception section, the first hinge part includes a first hinge member arranged on the rotation axis and non-turnably connected to one of the transmission section and the reception section, a second hinge member arranged on the rotation axis and relatively turnable between the folding position and the talking position with respect to the first hinge member, turn biasing means for turn biasing the second hinge member from the folding position to the talking position with respect to the first hinge member, lock means for locking the second hinge member to the folding position, and lock releasing means for releasing the locked state caused by the lock means with respect to the second hinge member, the second hinge part includes a first engagement member arranged on the rotation axis and turnably connected to the other of the transmission section and the reception section, a second engagement member arranged on the rotation axis in opposing relation to the first engagement member and turnable with respect to the transmission section and the reception section, first retaining means for positionally fixing the first engagement member to the folding position with a predetermined retaining force, second retaining means for positionally fixing the second engagement member to the talking position with a predetermined retaining force, and turn resisting means for restricting relative turning motion of the first and second engagement members between the folding position and the talking position with a predetermined resisting force, the second hinge member of the first hinge part and the second engagement member of the second hinge part being non-turnably connected together, and the retaining force of the first retaining means for positionally fixing the first engagement member to the folding position being set to be larger than the turn biasing force of the turn biasing means with respect to the second hinge member.

In that case, it is preferable that the turn biasing means includes movable member non-turnably disposed at the second hinge member but movable in the direction of the rotation axis, a first straight movement biasing member for biasing the movable member in the direction of the rotation axis toward the first hinge member, and first conversion means for converting the biasing force of the first straight movement biasing member to a turn biasing force for turning the movable member from the first position side toward the second position side.

The first retaining means preferably includes a second straight movement biasing member for biasing the second engagement member in the direction of the rotation axis toward the first engagement member, and second conversion means for converting the turn biasing force of the second straight movement biasing means to a turn biasing force for turn biasing the first engagement member from the talking position side toward the folding position side when the first engagement member is located in a predetermined angle range from the folding position toward the talking position side.

The second retaining means preferably includes a third straight movement biasing member for biasing the second engagement member in the direction of the rotation axis toward the first engagement member, and third conversion means for converting the biasing force of the third straight movement means to a turn biasing force for turn biasing the first engagement member from the folding position side toward the talking position side when the first engagement member is located in a predetermined angle range from the talking position toward the folding position side.

It is preferable that the turn biasing means includes movable member non-turnably disposed at the second hinge member but movable in the direction of the rotation axis, a first straight movement biasing member for biasing the movable member in the direction of the rotation axis toward the first hinge member, and first conversion means for converting the biasing force of the first straight movement biasing member to a turn biasing force for turning the movable member from the folding position side toward the talking position side, the first retaining means includes a second straight movement biasing member for biasing the second engagement member in the direction of the rotation axis toward the first engagement member, and second conversion means for converting the biasing force of the second straight movement biasing means to a turn biasing force for turn biasing the first engagement member from the talking position side toward the folding position side when the first engagement member is located in a predetermined angle range from the folding position toward the talking position side, and the second retaining means includes third straight movement biasing member for biasing the second engagement member in the direction of the rotation axis toward the first engagement member, and third conversion means for converting the biasing force of the third straight movement means to a turn biasing force for turn converting the first engagement member from the folding position side toward the talking position side when the first engagement member is located in a predetermined angle range from the talking position toward the folding position side, and the first straight movement biasing member, the second straight movement biasing member and the third straight movement biasing member are mutually commonly used.

### Brief Description of Drawings

FIG. 1 is an illustration showing one embodiment of a cellular telephone in which a hinge unit according to this invention is used, FIG. 1(A) is a side view in which a reception section is turned to a talking position, and FIG. 1(B) is a front view thereof.
FIG. 2 is an enlarged sectional view taken along line X-X of FIG. 1.
FIG. 3 is a sectional view taken on line X-X of FIG. 2, showing the hinge unit according to the present invention.
FIG. 4 is a sectional view taken on line X-X of FIG. 3.
FIG. 5 is an exploded perspective view of the hinge unit in which a coiled spring and a return spring are omitted.
FIG. 6 is a view showing a first hinge member of the above hinge unit, FIG. 6(A) is a front view thereof, FIGS. 6(B) through 6(D) are views when viewed in the directions as indicated by arrows B, C, D of FIG. 6(C), respectively and FIG. 6(E) is a sectional view taken on line E-E of FIG. 6(C).
FIG. 7 is a view showing a lock member of the above hinge unit, FIG. 7(A) is a front view thereof, and FIGS. 7(B) and 7(C) are views when viewed in the directions as indicated by arrows B, C of FIG. 8(A), respectively.
FIG. 8 is a view showing a pressing member of the above hinge unit, FIG. 8(A) is a front view thereof, FIGS. 8(B) and (D) are views when viewed in the directions as indicated by arrows B, D of FIG, 8(A), respectively and FIG. 8(C) is a sectional view taken on line C-C of FIG. 8(B).
FIG. 9 is a view showing intermediate members of the hinge unit, FIG. 9(A) is a front view thereof, FIGS. 9(B), 9(C) and 9(D) are views when viewed in the directions as indicated by arrows C, D of FIG. 9(A), respectively and FIG. 9(E) is a sectional view taken on line E-E of FIG. 9(C).
FIG. 10 is a view showing a second hinge member of the above hinge unit, FIG. 10(A) is a front view thereof, FIG. 10(A) is a sectional view thereof, FIG. 10(B) is a sectional view taken on line B-B of FIG. 10(A), and FIGS. 10(C) and 10(D) are views when viewed in the directions as indicated by arrows C, D of FIG. 10(A).
FIG. 11 is a view showing a movable member of the above hinge unit, FIG. 11(A) is a front view thereof, FIGS. 11(B), 11(C) and 11(D) are views when viewed in the directions as indicated by arrows B, C, D of FIG. 11(A), respectively, and FIG. 11(E) is sectional view taken on line E-E of FIG. 11(A).
FIG. 12 is a view showing a first engagement member of the above hinge unit, FIG. 12(A) is a plan view thereof, FIG. 12(B) is a view when viewed in the direction as indicated by an arrow B of FIG. 12(A), and FIG. 12(C) is a sectional view taken on line C-C of FIG. 12(A).
FIG. 13 is a view showing a second engagement member of the above hinge unit, FIG. 13(A) is a front view thereof, FIGS. 13(B) and 13(C) are views when viewed in the directions as indicated by arrows B, C of FIG. 13(A), respectively, and FIG. 13(D) is an enlarged sectional view taken on line D-D of FIG. 13(B).
FIG. 14 is a view showing the operation of an end face, a return inclination surface, and an inclination surface in the above hinge unit.

### Best Mode for Carrying Out the Invention

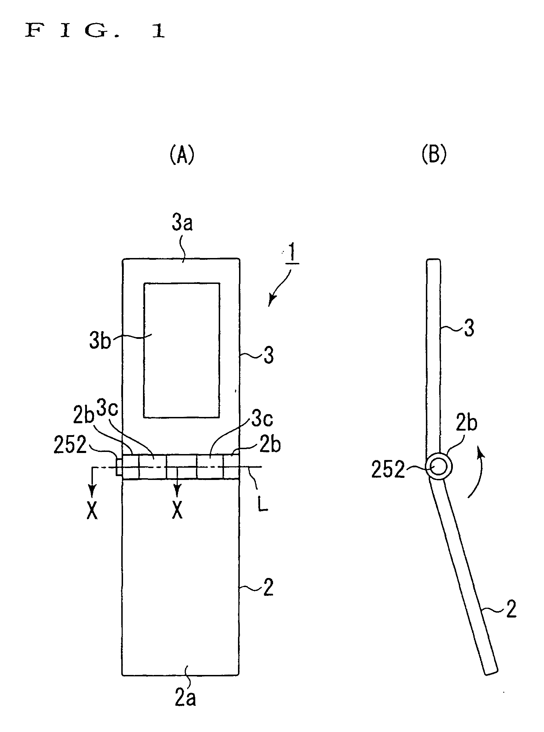

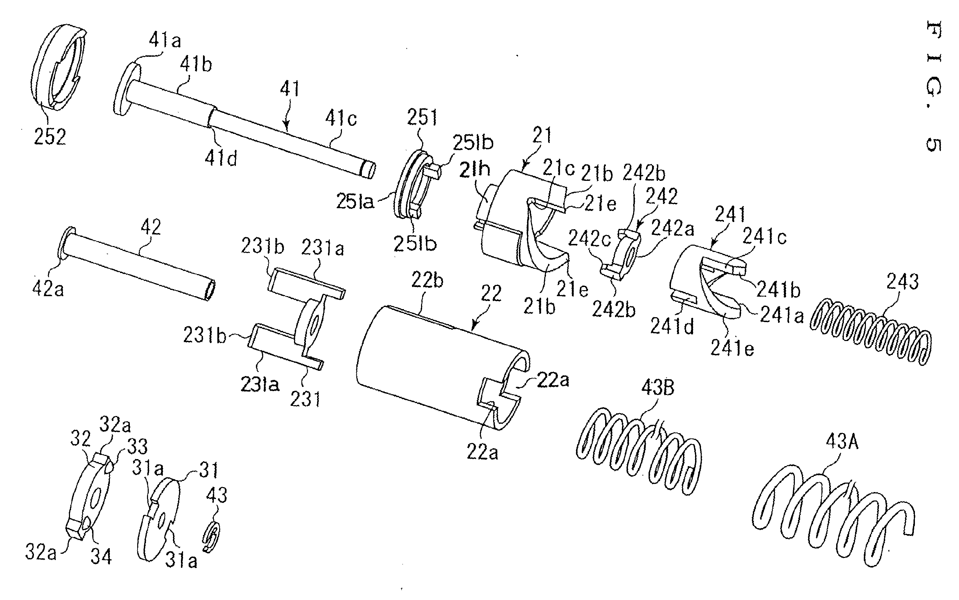

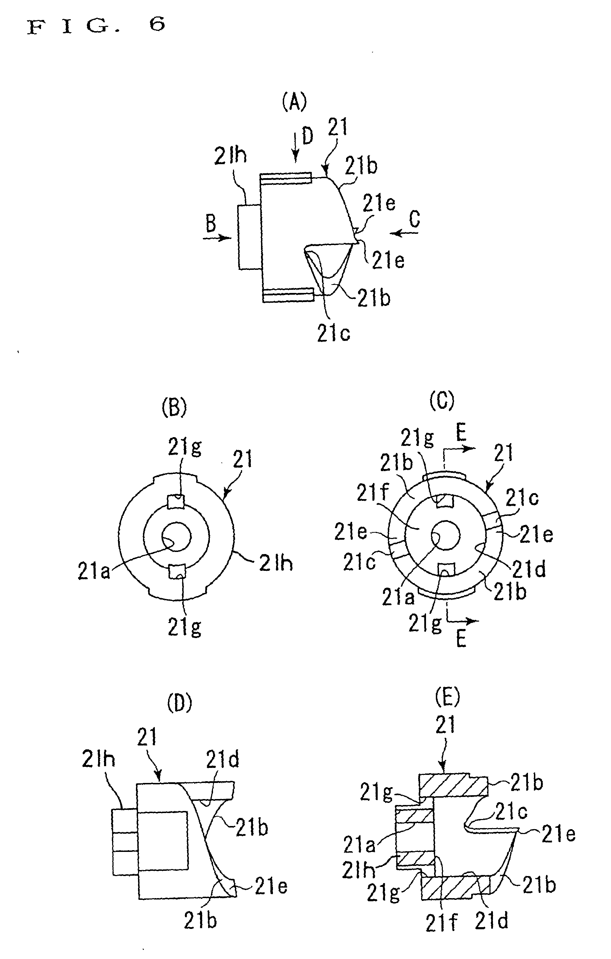

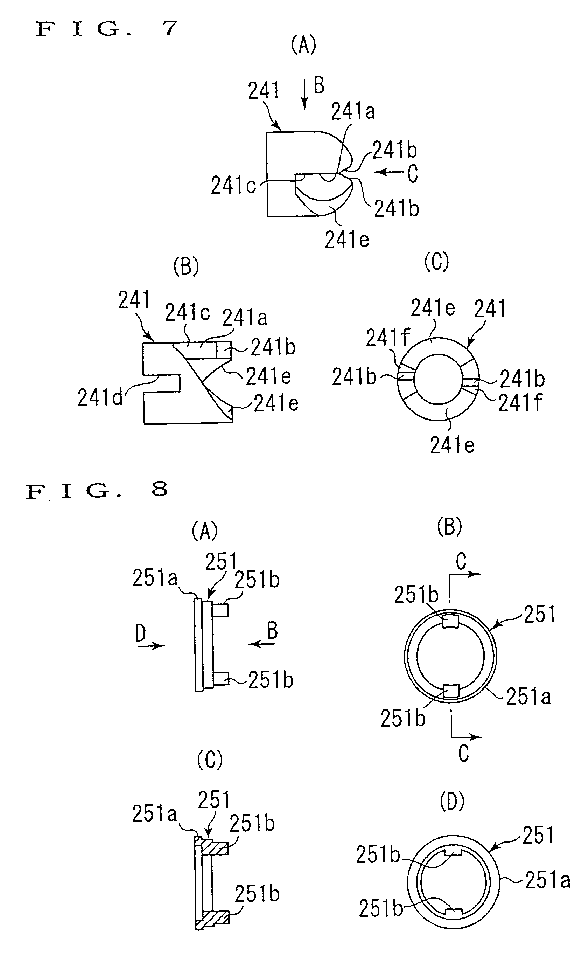

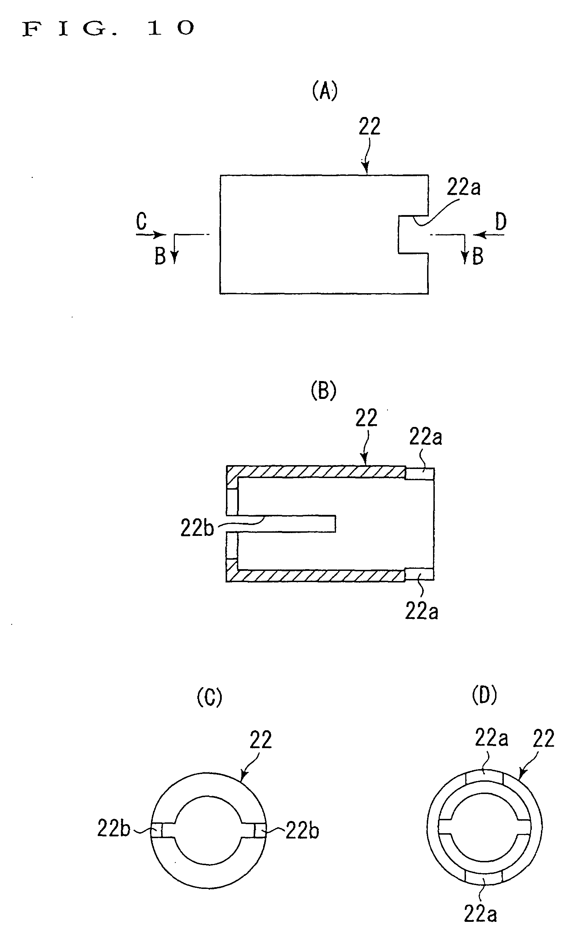

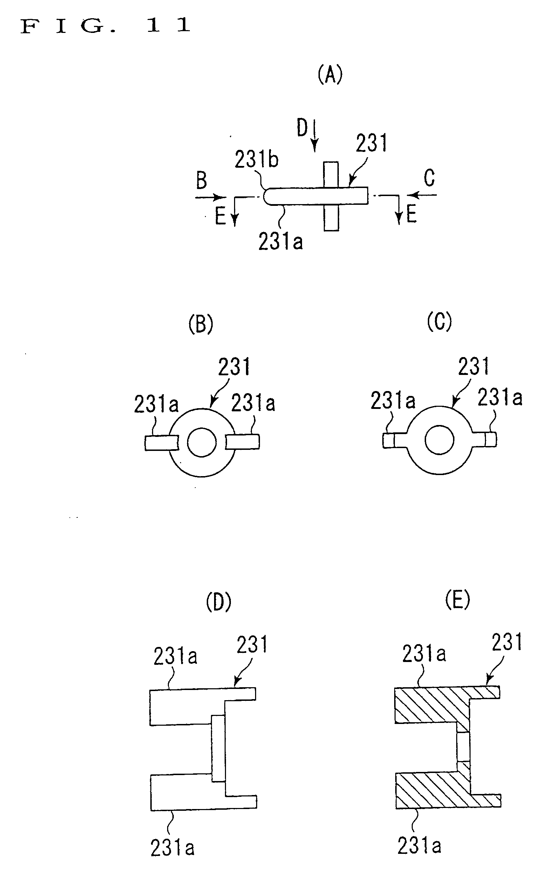

One embodiment of the present invention will be described hereinafter with reference to FIGS. 1 through 14.

FIG. 1 shows one embodiment of a portable cellular telephone according to the present invention. The portable cellular telephone 1 comprises a transmission section 2 and a reception section 3 which are turnably connected together about a rotation axis L. The transmission section 2 is provided at a front surface 2a thereof with a small-sized microphone and various keys (none of them are shown). The reception section 3 is provided at a front surface 3a thereof with a small-sized speaker (not shown) and a liquid crystal display part 3b.

The transmission section 2 is provided at one end part thereof on the side of the reception section 3 with two connection cylindrical parts 2b. Those two connection cylindrical part 2b are each provided at each end part in the left and right direction of the transmission section 2. The reception part 3 is provided at one end part thereof on the side of the transmission section 2 with two connection cylindrical parts 3c. Those two connection cylindrical parts 3c are disposed between the connection cylindrical parts 2b, 2b of the transmission section 2. The two connection cylindrical parts, 3c, 3c are generally in contact with inner end faces of the adjacent connection cylindrical parts 2b, respectively. The connection cylindrical parts 2b, 3c are arranged such that their axes are aligned with the rotation axis L.

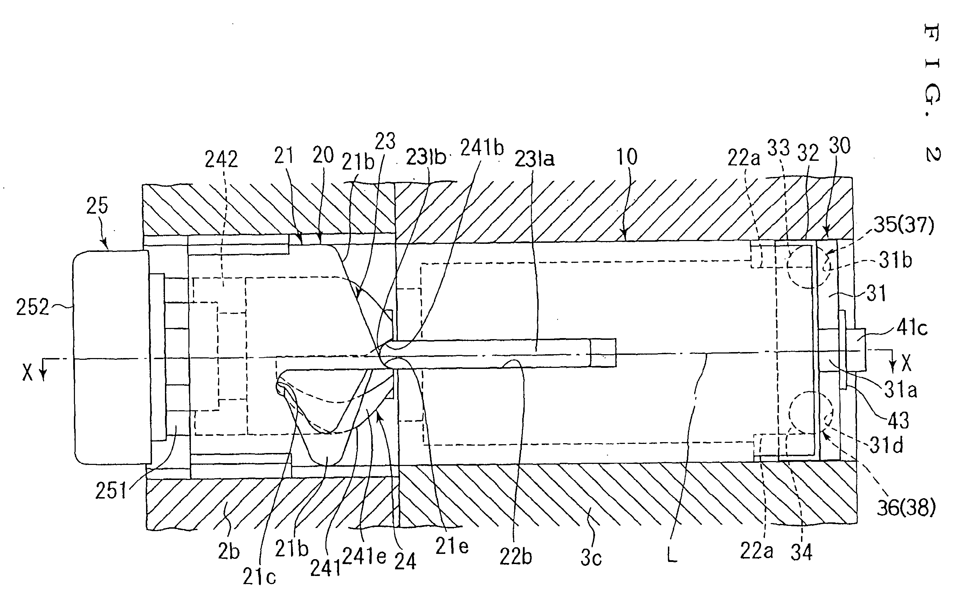

One set (left-side set in FIG. 1) of the mutually adjacent two sets of connection cylindrical parts 2b, 3c; 2b, 3c are turnably connected together by a hinge unit 10 (see FIG. 2) according to the present invention about the rotation axis L. The other set of connection cylindrical parts 2b, 3c (right-side set) are turnably connected together by a known hinge unit (not shown) about the rotation axis L. Owing to this arrangement, the transmission section 2 and the reception section 3 are turnably connected together about the rotation axis L. For the sake of convenience of explanation, description will be made hereinafter on the basis that the reception section 3 is turned with respect to the transmission section 2.

The reception section 3 is turnable between a folding position (first position) and a talking position (second position) with respect to the transmission section 2. The folding position is restricted by abutment of the front surface 3a of the reception section 3 against the front surface 2a of the transmission section 2. The talking position is restricted by mutual abutment of abutment parts (none of them are shown) of the transmission section 2 and the reception section 3 when the reception section 3 is turned by a predetermined angle (165 degrees in this embodiment) from the folding position. Accordingly, the reception section 3 is unable to turn beyond the talking position in a direction toward the talking position side from the talking position side, and the reception section 3 is unable to turn beyond the folding position in a direction toward the folding position side from the folding position side.

The hinge unit 10 will be described next. First, operation of the hinge unit 10 will be described diagrammatically. It is presumed here that the reception section 3 is located in the folding position. When a control button 252 of the hinge unit 10 is depressed in that state, the reception section 3 is automatically turned from the folding position to the talking position by the turn biasing force of the hinge unit 10. The reception section 3 turned to the talking position can manually be turned toward the folding position side against the turn biasing force of the hinge unit 10. When the reception section 3 is manually be turned to a position which is closer to this side by a predetermined angle (about 10 degrees in this embodiment) of the folding position from the talking position, the reception section 3 is not only turned to the folding position by the turn biasing force of the hinge unit 10 but also maintained in the folding position by abutment of the front surface 3a of the reception section 3 against the front surface 2a of the transmission section 2.

The reception section 3 can also manually be turned between the folding position and the talking position. Description will be made first on a case wherein the reception section 3 is to be turned from the folding position side toward the talking position side. In a predetermined angle range (about 15 degrees in this embodiment) toward the talking position side from the folding position, the reception section 3 is turned against the turn biasing force of the hinge unit 10. Until the reception section 3 reaches a position which is closer to this side by a predetermined angle (about 15 degrees in this embodiment) with respect to the talking position, the reception section 3 is turned toward the talking position side against the frictional resistance which acts on the hinge unit 10. When the reception section 3 turns to the position which is closer to this side by the predetermined angle with respect to the talking position, the reception section 3 is not only turned to the talking position by the turn biasing force of the hinge unit 10 but also maintained in the talking position. In contrast, in a case wherein the reception section 3 is to be turned toward the folding position side from the talking position, in a predetermined angle range (about 15 degrees in this embodiment) from the talking position toward the talking position side, the reception section 30 is turned against the turn biasing force of the hinge unit 10. Thereafter, until the reception section 3 reaches a position which is closer to this side by a predetermined angle (about 15 degrees in this embodiment) with respect to the folding position, the reception section 3 is turned toward the folding position side against the frictional resistance which acts on the hinge unit 10. When the reception section 3 is turned to the position which is closer to this side by the predetermined angle (about 15 degrees in this embodiment) with respect to the folding position, the reception section 3 is turned to the folding position by the turn biasing force of the hinge unit 10 and maintained in the folding position.

The concrete construction of the hinge unit 10 thus operated will be described next. As shown in FIGS. 2 through 4, the hinge unit 10 comprises a first hinge part 20 for automatically turning the reception section 3 from the folding position to the talking position, and a second hinge part 30 which is operated when the reception section 3 is manually turned.

First, the first hinge part 20 will be described. The first hinge part 20 includes a first hinge member 21, a second hinge member 22, a turn biasing means 23, a lock means 24 and a lock releasing means 25.

The first hinge member 21 is, as shown in FIG. 2, fixedly inserted in the connection cylindrical part 2b of the transmission section 2. Accordingly, the first hinge member 21 is not moved in the direction of the rotation axis L nor turned (it is presumed here that the transmission section 2 is fixed and the reception section 3 is turned). On the other hand, the second hinge member 22 is non-turnably inserted in the connection cylindrical part 3c of the reception section 3 through the second hinge part 30. Accordingly, the second hinge member 22 is turned together with the reception section 3. It is noted here, however, that the second hinge member 22 is turnable with respect to the connection cylindrical part 3c when the second hinge part 30 is operated.

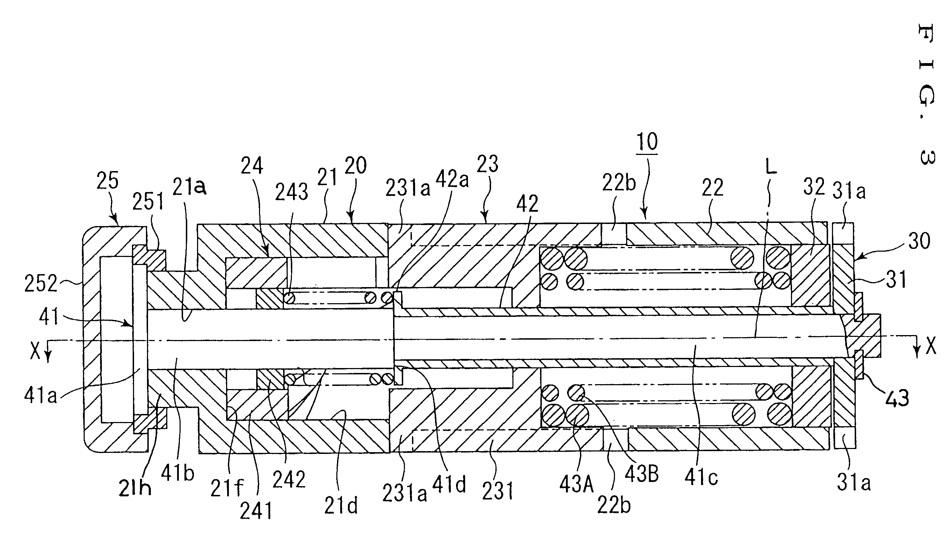

The first hinge member 21 and the second hinge member 22 are turnably connected together through a hinge shaft 41 whose axis is aligned with the rotation axis L. The hinge shaft 41 includes a disc-like head part 41a, an enlarged-diameter part 41b having a smaller diameter than the head part 41a, and a reduced-diameter part 41c having a smaller diameter than the enlarged-diameter part 41b, which are sequentially formed from one end part of the hinge shaft 41 toward the other end part (from the left end part to the right end part in FIGS. 1 through 4, the terms "left" and "right" used hereinafter refer to left and right in FIGS. 1 through 4), as shown in FIGS. 3 through 5.

As shown in FIG. 3, the enlarged-diameter part 41b of the hinge shaft 41 is turnably fitted to a reduced-diameter hole part 21a which is formed in a left end part of the first hinge member 21. The first hinge member 21, when abutted with the head part 41a, is prevented from escaping leftward. The reduced-diameter part 41c of the hinge shaft 41 is fitted to a cylindrical member 42. A flange part 42a is formed on a left end part of this cylindrical member 42. When this flange part 42a is abutted with a step part 41d formed between the enlarged-diameter part 41b and the reduced-diameter part 41c, the cylindrical member 42 is prevented from moving leftward. A first engagement member 31 of the second hinge part 30 is turnably fitted to a right end part of the reduced-diameter part 41c protruding rightward from the cylindrical member 42. This first engagement member 31 is abutted with a right end face of the cylindrical member 42 and prevented from escaping rightward through a stop ring 43. Owing to this arrangement, the cylindrical member 42 and the first engagement member 31 are fitted to the reduced-diameter part 41c of the hinge shaft 41 such that the cylindrical member 42 and the first engagement member 31 are non-movable in the direction of the rotation axis L.

A second engagement member 32 of the second hinge part 30 is turnably fitted to a right end part of the cylindrical member 42. An inner periphery of a right end part of the second hinge member 22 is fitted to an outer periphery of this second engagement member 32. A first guide groove 22a extending in parallel with the rotation axis L is formed at a right end part of the second hinge member 22. A key part 32a, which is formed on an outer periphery of the second engagement member 32 is engaged in this first guide groove 22a. Owing to this arrangement, the second hinge member 22 is non-turnably connected to the second engagement member 32, and turnably connected to the first hinge member 21 through the cylindrical member 42 and the hinge shaft 41. As a result, the transmission section 2 and the reception section 3 are turnably connected together about the rotation axis L.

The turn biasing means 23 is adapted to turn the second hinge member 22 from the folding position to the talking position by the turn biasing force thereof and eventually, turn the reception section 3 from the folding position to the talking position. The turn biasing means is constructed in the following manner. That is, as shown in FIGS. 2 through 6, a pair of end face cams (first conversion means) 21b, 21b extending in the peripheral direction are point symmetrically formed on a right end face of the first hinge member 21 opposing the second hinge member 22 about the rotation axis L. On the other hand, as shown in FIGS. 2 through 5 and FIG. 10, two second guide grooves 22b extending in parallel with the rotation axis L are formed at 180 degrees separated from each other in the peripheral direction on a left end face of the second hinge member 22 opposing the first hinge member 21. Two plate parts 231a, 231a of a movable member 231 turnably fitted to the outer periphery of the cylindrical member 42 are slideably inserted in the respectively second guide grooves 22b. Accordingly, the movable member 231 is non-turnable with respect to the second hinge member 22 but movable with respect to the second hinge member 22 in the direction of the rotation axis L. The movable member 231 is biased toward the first hinge member 21 side along the rotation axis L by large and small coiled springs 43A, 43B (first, second and third straight movement biasing members) which are disposed between the movable member 231 and the second engagement member 32. By the biasing force of the coiled springs, semi-circular arcuate parts 231b, 231b, which are formed on left end faces of the two plate parts 231a, 231a, are abutted with end face cams 21b, 21b of the first hinge member 21, respectively. The end face cam 21b is adapted to convert the biasing force which acts on the movable member 231 in the direction of the rotation axis L to a turn biasing force for turning the movable member 231. By this turn biasing force, the second hinge member 22 is turn biased from the folding position side toward the talking position side.

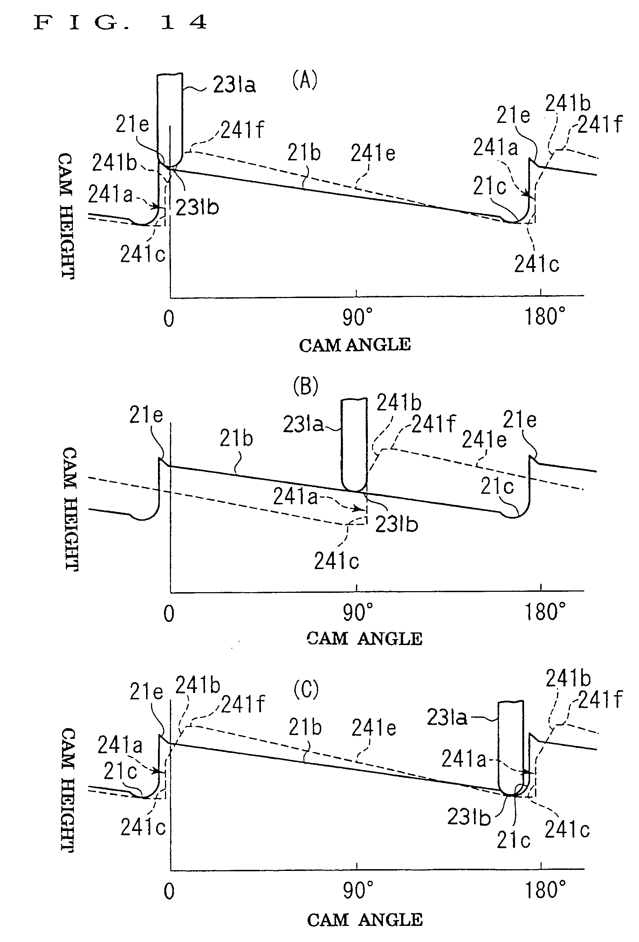

As shown in FIG. 14, when the reception section 3 is located in the folding position (see FIG. 14(A)), the arcuate part 231b of the movable member 231 is in contact with an upper end part (right end part) of the end face cam 21b. The angle in the peripheral direction from an upper end to a lower end of the end face cam 21b is set to be slightly smaller (for example, 160 degrees) than the maximum turning angle (165 degrees) of the reception section 3. A recess 21c is formed at a lower end part (left end part) of the end face cam 21b in such a manner as to be continuous with the above angle. When the reception section 3 is turned to the talking position, as shown in FIG. 14(C), the arcuate part 231b is contacted with an inclination part on the side of the end face cam 21b from the center of a bottom surface which defines the recess 21c, so that even after the reception section 3 reaches the talking position, the movable member 231, and eventually, the reception section 3 is biased from the folding position side toward the talking position side by this inclination part. Accordingly, an inclination part continuous with the end face cam 21b of the bottom surface of the recess 21c also constitutes the first conversion means together with the end face cam 21b.

The lock means 24 is, as shown in FIGS. 2 through 4, adapted to positionally fix the second hinge member 22 to the folding position against the turn biasing force of the turn biasing means 23. The lock means 24 includes a lock member 241, an intermediate member 242 and a return spring 243.

The lock member 241 is, as shown in FIGS. 2 through 5 and FIG. 7, is of a circular cylindrical configuration and turnably fitted to the enlarged-diameter hole part 21d formed on the right end part side of the first hinge member 21. Two lock surfaces 241a are point symmetrically formed at the right end face of the lock member 241 about the rotation axis L. This lock surface 241a comprises an inclination surface 241b inclined by a predetermined angle (about 30 degrees in this embodiment) with respect to the rotation axis L and a straight surface 241c extending straight from a left end of this inclination surface 241b along the rotation axis L. When the reception section 3 is located at the folding position, the inclination surface 241b is in abutment with the arcuate part 231b of the movable member 231. Accordingly, unless the lock member 241 is turned from the folding position toward the talking position side, the movable member 231 is non-turnable from the folding position toward the talking position side and thereby, the second hinge member 22 and the reception section 3 are positionally fixed to the folding position. Moreover, in the state in which the arcuate part 231b is in abutment with the inclination surface 241b, the movable member 231 is turn biased from the talking position side toward the folding position side by the biasing force of the coiled springs 43A, 43B and thereby, the reception section 3 is maintained in a state in which reception section 3 is in abutment with the transmission section 2. The lock member 241 is also biased in the direction leftward of the rotation axis L by the biasing force of the coiled springs 43A, 43B, and abutted with the step surface 21f formed between the reduced-diameter hole part 21a and the enlarged-diameter hole part 21d of the first hinge member 21.

In the state in which the movable member 231 is locked by the lock member 241 and the reception section 3 is located in the folding position, the plate part 231a of the movable member 231 is, as mentioned above, generally in contact with the upper end part (right end part) of the end face cam 21b. An arcuate part 21e further extending upward (rightward) from the upper end part of the end face cam 21b is formed on the end face of the first hinge member 21. This arcuate part 21e is never contacted with the movable member 231 in the state in which the hinge unit 10 is assembled to the portable cellular telephone 1. However, when the hinge unit 10 is handled as a unitary body before being assembled to the portable cellular telephone 1, the arcuate part 21e retains the arcuate part 231b of the movable member 231 which is turn biased by the inclination surface 241b. Owing to this arrangement, the plate part 231a is prevented from escaping from the upper end of the end face cam 21b.

In order to positionally fix the lock member 241 to the folding position, the intermediate member 242 is used. The intermediate member 242 includes, as shown in FIGS. 2 through 5 and FIG. 9, a circular ring-like main body part 242a. This main body part 242a is arranged between an outer peripheral surface of the enlarged-diameter part 41b of the hinge shaft 41 and an inner peripheral surface of the lock member 241 such that the main body part 242a is turnable about the rotation axis L and movable in the direction of the rotation axis L. The main body part 242a is biased leftward by the return spring 243 which is disposed between the main body part 242a and the flange part 42a of the cylindrical member 42 and abutted with the step surface 21f formed between the reduced-diameter hole part 21a and the enlarged-diameter hole part 21d of the first hinge member 21.

Two engagement arm parts 242b are point-symmetrically formed on the outer peripheral surface of the main body part 242a of the intermediate member 242 about the rotation axis L. The respective engagement arm parts 242b are inserted in two lock grooves 241d formed at the left end face of the engagement member 241 such that the engagement arm parts 242b are non-movable in the peripheral direction but movable in the direction of the rotation axis L. Accordingly, the intermediate member 242 is turned in unison with the lock member 241, but movable with respect to the lock member 241 in the direction of the rotation axis L. The engagement arm part 242b is protruded leftward from the main body part 242a and fitted to a through-hole 21g extending from the step surface 21f of the first hinge member 21 to the left end face thereof along the rotation axis L such that the engagement arm part 242b is movable in the direction of the rotation axis L but non-movable in the peripheral direction. In the state in which the engagement arm 242b is fitted to the through-hole 21g, the intermediate member 242 and the lock member 241 become non-turnable with respect to the first hinge member 21. Thus, the movable member 231 becomes non-movable, and the second hinge member 22 and the reception section 3 are positionally fixed to the folding position. On the other hand, when the engagement arm 242b is escaped from the through-hole 21g, the intermediate member 242 and the lock member 241 become turnable with respect to the first hinge member 21 and the second hinge member 22 and the reception section 3 become turnable from the folding position toward the talking position side.

The lock releasing means 25 is adapted to release the locked state in the folding position of the movable member 231 caused by the lock means 24. The lock releasing means 25 includes a pressing member 251 and a control button 252.

The pressing member 251 includes, as shown in FIGS. 2 through 5 and FIG. 8, a ring-like main body part 251a. This main body part 251a is slideably fitted to a protrusion part 21h formed on the left end face of the first hinge member 21. Two abutment protrusions 251b are formed on the right end face of the main body part 251a. The respective abutment protrusions 251b are allowed to extend in parallel with the rotation axis L and arranged at 180 degrees separated from each other in the peripheral direction. A distal end part of each abutment protrusion 251b is inserted in the through-hole 21g of the first hinge member 21 and abutted with the engagement arm part 242b of the intermediate member 242. When the main body part 251a is moved rightward until it is abutted with the left end face of the first hinge member 21, the distal end face of the abutment protrusion 251b brought to be flush with the step surface 21f of the first hinge member 21 so that the engagement arm part 242b is pushed out of the through-hole 21g of the first hinge member 21. As a result, the intermediate member 242 and the lock member 241 become turnable from the folding position toward the talking position side, and the movable member 231, the second hinge member 22 and the reception section 3 are turned from the folding position to the talking position by the turn biasing force of the turn biasing means 23.

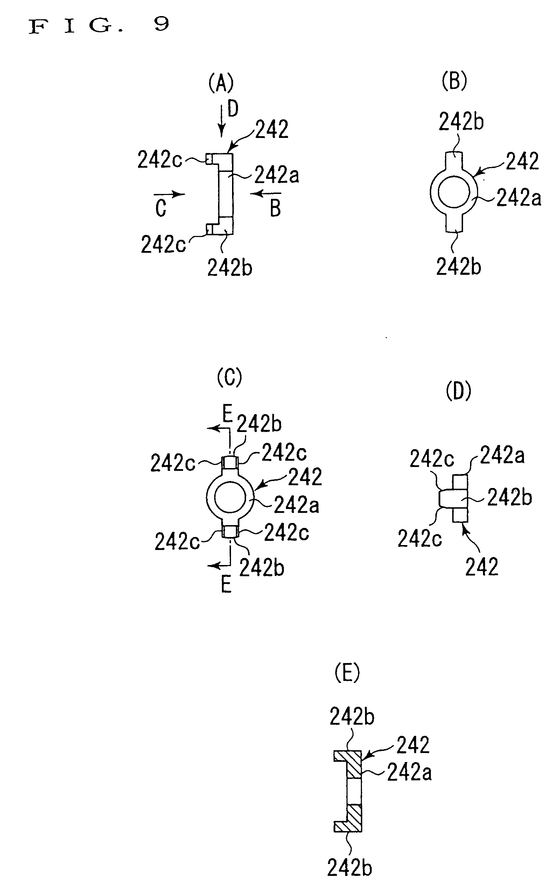

Since the intermediate member 242 and the lock member 241 are point-symmetrically formed with respect to the rotation axis L, when they are turned by 180 degrees from the folding position, they are brought to be in the same states as when they are located in the folding position. That is, when the intermediate member 242 is turned by 180 degrees, the two engagement arm parts 242b are fitted to the through-holes 21g of the first hinge member 21, respectively. A turning angle from the folding position to the talking position of the reception section 3 is 165 degrees. Let's presume that when the reception section 3 is turned from the folding position to the talking position, the intermediate member 242 is turned by the same angle as the reception section 3. When the reception section 3 is turned to the talking position, the engagement arm part 242b of the intermediate member 242 is unable to fit to the through-hole 21g. However, in this hinge unit 10, when the reception section 3 is located in the folding position, the arcuate part 231b of the plate part 231a of the movable member 231 is in contact with the inclination surface 241b of the lock member 241. Therefore, when the plate part 231a is turned from the folding position toward the talking position side and slid down on the end face cam 21b, the lock member 241 and the intermediate member 242 are more greatly turned by a length (angle) in the peripheral direction of the inclination surface 241b than the movable member 231 by the plate part 231a. In addition, as shown in FIG. 9, a chamfering part 242c directing peripherally is formed on a distal end face (left end face) of the engagement arm part 242b of the intermediate member 242. When the reception section 3 is turned to the talking position, the distal end part of the chamfering part 242c is brought into opposing relation to the through-hole 21g of the first hinge member 21. As a result, the engagement arm part 242b can be brought into the through-hole 21g. When the intermediate member 242 is moved leftward by the return spring 243, the intermediate member 242 is turned from the folding position side toward the talking position side by the chamfering part 242c sliding on an end edge on the intermediate member 242 side of the through-hole 21g and finally turned by 180 degrees from the folding position. As a result, the intermediate member 242 and the lock member 242 are brought into the same states as when they are located in the folding position.

As shown in FIGS. 2 through 5, the control button 252 is fixedly fitted to a left end part of the pressing member 251. Accordingly, by pressing the control button 252 rightward, the pressing member 251 can be moved rightward and thereby, the locked state caused by the lock means 24 can be released. As shown in FIG. 2, even in the initial state (state in which the reception section 3 is located in the folding position), in which the engagement arm part 242b of the intermediate member 242 is brought into the through-hole 21g, a right end part of the control button 252 is brought into a left end part of the connection cylindrical part 2b of the transmission section 2. Owing to this arrangement, other component members of the hinge unit 10 than the control button 252 cannot be visually recognized from outside.

At the time for turning the reception section 3, which has been turned to the talking position by the turn biasing means 23, so as to return to the folding position, the reception section 3 is manually be turned against the biasing force of the turn biasing means 23. In the initial stage of the returning turning motion, the arcuate parts 231b, 231b of the movable member 231 are in contact with the end face cams 21b, 21b. However, from a midway of the returning turning motion, the arcuate parts 231b, 231b of the movable member 231 come to contact the return inclination surfaces 241e, 241e which are formed between the inclination surfaces 241b, 241b of the end face of the lock member 241 and extending in the peripheral direction. The return inclination surfaces 241e, 241e are point-symmetrically formed about the rotation axis L. As shown in FIG. 14, the inclination angle of the return inclination surfaces 241e, 241e is set to be slightly larger than the inclination angle of the end face cam 21b. A lower end of the return inclination surface 241e is set to be slightly lower than a lower end of the end face cam 21b, and an upper end of the return inclination surface 241e is set to be slightly higher than the upper end of the end face cam 21b. Owing to this arrangement, the arcuate part 231b is shifted onto the return inclination surface 241e from the end face cam 21b in the midway of returning turning motion of the reception section 3 from the talking position. The return inclination surface 241e may be designed such that the arcuate part 231b can slide thereon from the initial stage of the returning turning motion of the reception section 3. When the reception section 3 is returningly turned to a position in this side by a predetermined angle (as described above, about 10 degrees in this embodiment) with respect to the folding position, the arcuate part 231 is brought into contact with the inclination surface 241b. As a result, the biasing force of the coiled springs 43A, 43B is converted to a turn biasing force. Then, the movable member 231 is turn biased from the talking position side toward the folding position side by this turn biasing force and the reception section 3 is abutted with the transmission section 2. In this embodiment, although a planar surface 241f having a constant height (position in the direction of the rotation axis L) is formed between the return inclination surface 241e and the inclination surface 241f, this planar surface 241f is not necessarily required to form.

The second hinge part 30 will be described next. As shown in FIGS. 2 through 5, the second hinge part 30 includes a first and a second engagement member 31, 32 which each have a disc-like configuration. The first engagement member 31 is turnably fitted to an outer peripheral surface of the reduced-diameter part 41c of the hinge shaft 41. A key groove 31a is formed at the outer peripheral surface of the first engagement member 31. By fitting a key part (not shown) formed at an inner peripheral surface of the connection cylindrical part 3c of the reception section 3 to this key groove 31a, the first engagement member 31 is non-turnably connected to the reception section 3. Moreover, the first engagement member 31 is prevented from moving rightward by being abutted with the stop ring 43. On the other hand, the second engagement member 32 is turnably fitted to an outer peripheral surface of a right end part of the cylindrical member 42, and also fitted to an inner peripheral surface of a right end part of the second hinge member 22. As previously mentioned, the key part 32a is formed on the outer peripheral surface of the second engagement member 32. By fitting this key part 32a into the first guide groove 22a of the second hinge member 22, the second engagement member 32 is connected to the second hinge member 22 such that the second engagement member 32 is non-turnable but movable in the direction of the rotation axis L. The second engagement member 32 is biased toward the first engagement member 31 side by the coiled springs 43A, 43B.

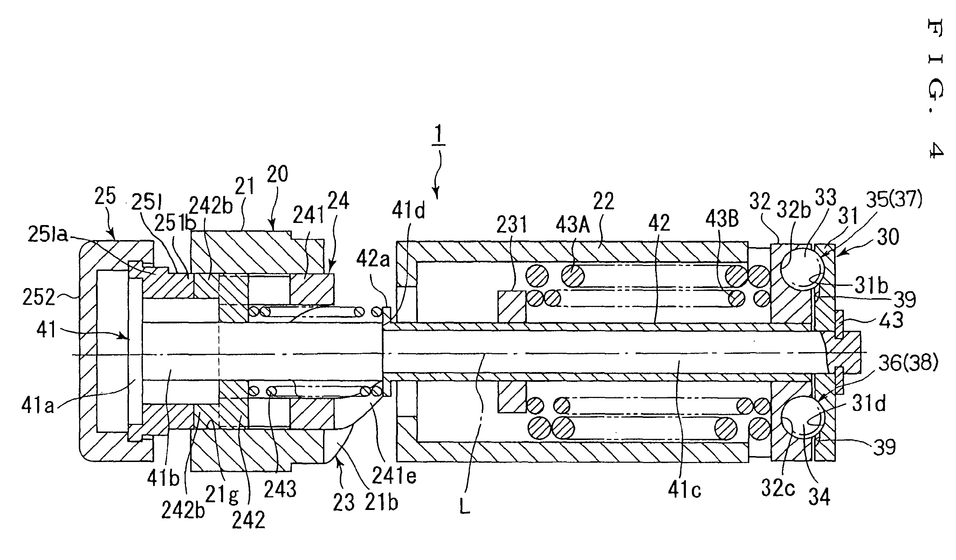

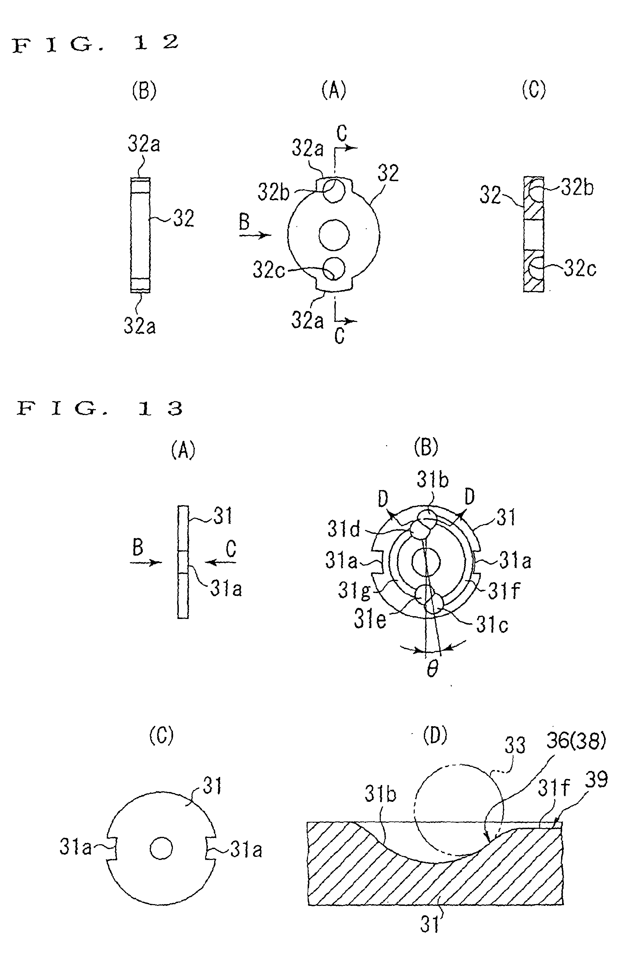

As shown in FIGS. 4 and 13, a pair of first engagement recesses 31b, 31c and a pair of second engagement recesses 31d, 31e are formed on a left end face opposing the second engagement member 32 of the first engagement member 31. The respective engagement recesses 31b through 31e are each defined by same-sized parts of spherical surfaces. The first engagement recesses 31b, 31c are arranged at 165 degrees separated from each other in the peripheral direction. That is, they are separately arranged at the same angle as the turning angle of the reception section 3 from the folding position to the talking position. A first guide recess 31f extending in the peripheral direction about the axis (rotation axis L) of the first engagement member 31 and adapted to connect the first engagement recesses 31b, 31c together is formed at a left end face of the first engagement member 31 between the first engagement recesses 31b, 31c. The second engagement recesses 31d, 31e are also arranged at 165 degrees separated from each other in the peripheral direction as in the case with the first engagement recesses 31b, 31c. Moreover, the second engagement recesses 31d, 31e are arranged at a predetermined angle θ (15 degrees in this embodiment) separated in the peripheral direction with respect to the first engagement recesses 31b, 31c. As a result, the first engagement recess 31b and the second engagement recess 31e are separated from each other by 180 degrees in the peripheral direction, and the first engagement recess 31c and the second engagement recess 31d are separated from each other by 180 degrees in the peripheral direction. The second engagement recesses 31d, 31e are arranged at places slightly on the inner periphery side from the first engagement recesses 31b, 31c, and those parts on the slantwise outer side of the second engagement recesses 31d, 31e are intersected with those parts on the slantwise inner side of the adjacent first engagement recesses 31b, 31c, respectively. A second guide groove 31g extending in the peripheral direction about the axis (rotation axis L) of the first engagement member 31 and adapted to connect the second engagement recesses 31d, 31e together are formed at a left end face of the first engagement member 31 between the second engagement recesses 31d, 31e.

As shown in FIGS. 3 through 5 and FIG. 12, attachment recesses 32b, 32c are formed at a right end face opposing the first engagement member 31 of the second engagement member 32. The attachment recesses 32, 32 are arranged at 180 degrees separated from each other in the peripheral direction of the second engagement member 32. The attachment recess 32b is arranged on a same circumference as the first engagement recesses 31b, 31e. The other attachment recess 32c is arranged on a same circumference as the second engagement recesses 31d, 31e. Spherical bodies 33, 34 are fixedly fitted to the attachment recesses 32b, 32c, respectively, such that parts of the spherical bodies 33, 34 are allowed to project therefrom. Instead of attaching the spherical bodies 33, 34 to the attachment recesses 32b, 32c, a spherical protrusion may be integrally formed on an opposing surface to the first engagement member 31 of the second engagement member 32.

When the reception section 3 is located in the folding position, the spherical body 33 attached to the attachment recess 32b is located such that the center of the spherical body 33 is shifted by a predetermined angle (about 15 degrees in this embodiment as mentioned above) in the peripheral direction with respect to the center of curvature of the first engagement recess 31b, and the spherical body 34 attached to the attachment recess 32c is located such that its center is shifted by the same angle with respect to the second engagement recess 31d. Accordingly, when the reception section 3 is located in the folding position, as shown in FIG. 13(D), the spherical body 33 contacts the inclination part of the bottom surface defining the first engagement recess 31b, and the spherical body 34 contacts the inclination part of the second engagement recess 31d. Owing to this arrangement, the biasing force of the coiled springs 43A, 43B for biasing the second engagement member 32 toward the first engagement member 31 side is converted to a turn biasing force. By this turn biasing force, the first engagement member 31 is turn biased from the talking position side toward the folding position side. As a result, the reception section 3 is maintained in the folding position where the reception section 3 is in abutment with the transmission section 2. As apparent from this, the first retaining means 35 is constituted by the coiled springs 43A, 43B, the first and second engagement recesses 31b, 31e and the spherical bodies 33, 34. The coiled springs 43A, 43B constitute the second straight movement biasing means, and the inclination parts of the first and second engagement recesses 31b, 31e and the spherical bodies 33, 34 constitute the second conversion means 36.

As a result from the fact that the first engagement member 31 is turn biased from the talking position side toward the folding position side, the second engagement member 32 is turn biased in the opposite direction by the reaction and eventually, the second hinge member 22 is turn biased toward the talking position side. However, the second hinge member 22 is positionally fixed to the folding position by the lock means 24. Accordingly, the second hinge member 22 is never turned toward the talking position side. This is true in both cases where the reception section 3 is manually turned from the folding position side toward the talking position side and where the reception section 3 is manually turned from the talking position side toward the folding position side.

Moreover, in the state in which the hinge unit 10 is assembled to the portable cellular telephone 1, when the reception section 3 is located in the folding position, the centers of the spherical bodies 33, 34 are shifted in the peripheral direction with respect to the centers of curvature of the first engagement recess 31b and the second engagement recess 31e. However, at the time for handling the hinge unit 10 as a unit before being assembled to the portable cellular telephone 1, the centers of the spherical bodies 33, 34 are coincident respectively with the centers of curvature of the first engagement recess 31b and the second engagement recess 31e in the peripheral position, and thereby, the first and second engagement members 31,32 are integrated.

When the reception section 3 is located in the talking position, the spherical body 33 is located in a position shifted with respect to the first engagement recess 31c by the same angle as the angle by which the spherical body 33 is shifted with respect to the first engagement recess 31b when the reception section 3 is located in the folding position. The spherical body 34 is likewise located in a position shifted with respect to the second engagement recess 31d. Accordingly, the spherical bodies 33, 34 are contacted with the inclination parts, respectively, of the bottom surfaces of the first and second engagement recesses 31c, 31d. As a result, the biasing force of the coiled springs 43A, 43B is converted to a turn biasing force. By this turn biasing force, the first engagement member 31 is turn biased from the folding position side toward the talking position side and the reception section 3 is maintained in the talking position. As apparent from the foregoing, the second retaining means 37 is constituted by the coiled springs 43A, 43B, the first and second engagement recesses 31c, 31d and the spherical bodies 33, 34. The coiled springs 43A, 43B constitute the third straight movement biasing means, and the inclination parts of the first and second engagement recesses 31c, 31d and the spherical bodies 33, 34 constitute the third conversion means 38. Accordingly, in the portable cellular telephone 10 according to this embodiment, the coiled springs 43A, 43B are commonly used as the first, second and third straight movement biasing means, and the spherical bodies 33, 34 are commonly used as the second and third conversion means 36, 38.

Operation of the portable cellular telephone 10 thus constructed will be described next with reference to FIG. 14. Let's presume here that the reception section 3 is currently located in the folding position. In that state, the control button 252 is pressed rightward in FIG. 1 so that the engagement arm member 242b of the intermediate member 242 escapes from the through-hole 21g of the first hinge member 21. Then, the locked state of the movable member 231 caused by the lock member 241 is released. As a result, the turn biasing force of the turn biasing means 23 is transmitted to the reception section 3 through the movable member 231, the second hinge member 22, the second engagement member 32 and the first engagement member 31, and the reception section 3 is turned toward the talking position side. The force for preventing the relative turning motion between the first engagement member 31 and the second engagement member 32 generated by fitting the spherical bodies 33, 34 into the first engagement recess 31b and the second engagement recess 31e, i.e., the retaining force of the first retaining means 35 is set to be larger than the turn biasing force of the turn biasing means 23. Accordingly, when the second engagement member 32 is turned from the folding position side toward the talking position side by the turn biasing means 23, the second engagement member 32 is turned in unison with the first engagement 31 without being turned relative to the first engagement member 31. Thus, the reception section 3 non-turnably connected to the first engagement member 31 is surely turned toward the talking position side. The reception section 3 is stopped when turned to the talking position. The turn biasing force of the turn biasing means 23 keeps acting on the reception section 3 even after the reception section 3 reaches the talking position. Accordingly, the reception section 3 is maintained in the talking position.

In accordance with the turning motion of the reception section 3 to the talking position, the intermediate member 242 and the lock member 241 are turned in the same direction as the turning direction of the reception section 3. When the engagement arm part 242b of the intermediate member 242 is fitted to the through-hole 21g of the first hinge member 21 by the return spring 243, the intermediate member 242 is further turned while moving leftward. And finally, the intermediate member 242 and the lock member 241 are turned by 180 degrees from the folding position. In that state, by fitting the engagement arm part 242b to the through-hole 21g, the intermediate member 242 and the lock member 241 become non-turnable with respect to the first hinge member 21.

At the time for turning the reception section 3, which has been turned to the talking position by the turn biasing means 23, to the folding position, the reception section 3 is manually turned toward the folding position side. When the reception section 3 is turned toward the folding position side, the turning force is transmitted to the second engagement member 32 through the first engagement member 31. At that time, in the initial stage for turning the reception section 3 toward the folding position side, the second engagement member 32 is turn biased toward the talking position side by the turn biasing means 23. However, the connecting force (retaining force of the first retaining means 35) acting between the first engagement member 31 and the second engagement member 32 is set to be larger than the turn biasing force of the turn biasing means 23. Accordingly, when the reception section 3 is turned toward the folding position side, the first and second engagement members 31, 32 are turned in sane direction as the turning direction of the reception section 3 in unison, and the second hinge member 22 and the movable member 231 are also turned in the same turning direction together with them against the turn biasing force of the turn biasing means 23. Then, in accordance with the turning motion of the movable member 231, the arcuate part 231b is slidingly moved on the end face cam 21b, and then on the return inclination surface 241e. When the reception section 3 is turned to a position slightly in this side (position about 10 degrees in this side) of the folding position, the arcuate part 231b of the movable member 231 is contacted with the inclination surface 241b of the lock member 241. As a result, the biasing force of the coiled springs 43A, 43B is converted to a turn biasing force, and by this turn biasing force, the reception section 3 is turned to the folding position. Moreover, this turn biasing force keeps acting on the reception section 3 even after the reception section 3 reaches the folding position. Accordingly, the reception section 3 is maintained in the folding position.

The reception section 3 can also manually be turned from the folding position to the talking position. In the initial stage of the turning motion of the reception section 3 from the folding position to the talking position, the reception section 3 is turned toward the talking position side against the turn biasing force (turn biasing force of the first retaining means 35) which biasing force of the coiled springs 43A, 43B is converted by the spherical bodies 33, 34, the inclination part of the bottom surface of the first engagement recess 31b and the inclination part of the bottom surface of the second engagement recess 31e. Of course, at that time, although the force for turning the reception section 3 acts on the second engagement member 32 and the second hinge member 22 through the first engagement member 31, the second engagement member 32 and the second hinge member 22 are not turned in that direction in accordance with the turning motion of the reception section 3 toward the talking position side, because the lock member 241 is non-turnably connected to the first hinge member 21 through the intermediate member 242. When the spherical bodies 33, 34 escape from the first engagement recess 31b and the second engagement recess 31e, no turn biasing force acts on the reception section 3. Instead, the spherical bodies 33, 34 are pressed against the first and second guide grooves 31f, 31g and thereby, a friction resistance is generated therebetween. Accordingly, the reception section 3 is turned toward the talking position side against this friction resistance. When the reception section 3 is turned to a position in this side by a predetermined angle (about 15 degrees) with respect to the talking position, the spherical bodies 33, 34 are brought into the first engagement recess 31c and the second engagement recess 31d. As a result, the reception section 3 is turned to the folding position by the turn biasing force of the second retaining means 37 and maintained in that position.

In case the reception section 3, which has been manually turned to the talking position, is to be turned to the folding position, in the reversed manner to the above, first, the reception section 3 is turned by a predetermined angle against the turn biasing force of the second retaining means 37 and thereafter, further turned toward the folding position side against the friction resistance until the reception section 3 reaches a position in this side by a predetermined angle from the folding position. Then, when the reception section 3 reaches the position in this side by a predetermined angle from the folding position, thereafter the reception section 3 is turned to the folding position by the turn biasing force of the first retaining means 35 and maintained in that position.

As described above, in this hinge unit 10, the reception section 3 can be turned from the folding position to the talking position automatically and manually. Moreover, at the time of manual turning, turning of the reception section 3 is prevented by the friction resistance acting between the outer peripheral surfaces of the spherical bodies 33, 34 and the bottom surfaces of the first and second guide grooves 31f, 31g at a predetermined intermediate part between the folding position and the talking position, i.e., at an intermediate part excluding a range of area where the biasing force of the first and second retaining means 35, 37 are prevailed. Accordingly, the reception section 3 can be stopped at any optional position in that intermediate part. As apparent from this, the turn resisting means 39 is constituted by the spherical bodies 33, 34 and the guide recesses 31f, 31g. However, the guide recesses 31f, 31g are not necessarily required to form, and the spherical bodies 33, 34 may be slidingly moved on the opposing surface of the first engagement member 31 with respect to the second engagement member 32.

The present invention is not limited to the above-mentioned embodiment but many changes and modifications can be made in accordance with necessity.

For example, in the above embodiment, although the hinge unit 10 according to the present invention is used as the portable cellular telephone 1, the hinge unit 10 can also be employed in a notebook type personal computer and the like.

Moreover, in the above embodiment, although two engagement recesses 31b, 31e are employed for the first retaining means 35 and two engagement recesses 31c, 31d are also employed for the second retaining means 37, two engagement recesses may commonly be used for the first retaining means 35 and the second retaining means 37. In that case, for example, the spherical bodies 33, 34 are point-symmetrically be arranged with respect to the axis (rotation axis L) of the first engagement member 31 and two engagement recesses may be point-symmetrically arranged with respect to the axis (rotation axis L) of the second engagement member 32. Moreover, those two engagement recesses are formed so as to have a predetermined length in the peripheral direction. Then, it may be designed such that when the reception section is turned to the folding position, the spherical bodies 33, 34 are located at one end parts in the peripheral direction of the engagement recesses, respectively and when the reception section is turned to the talking position, the spherical bodies 33, 34 are located at the other end parts in the peripheral direction of the engagement recesses, respectively.

### Industrial Applicability

A hinge unit according to the present invention can be utilized as a hinge unit for turnably connecting two parts such as a transmission section and a reception section of a portable cellular telephone or a main body part and a display of a notebook type personal computer.

## Claims

1. A hinge unit comprising a first and a second hinge part arranged, side by side, on a rotation axis,
said first hinge part including a first hinge member arranged on said rotation axis, a second hinge member arranged on said rotation axis and relatively turnable between a first position and a second position with respect to said first hinge member, turn biasing means for turn biasing said second hinge member from said first position to said second position with respect to said first hinge member, lock means for locking said second hinge member to said first position, and lock releasing means for releasing the locked state caused by said lock means with respect to said second hinge member,
said second hinge part including a first and a second engagement member relatively turnably arranged in mutually opposing relation on said rotation axis, first retaining means for positionally fixing said first engagement member to said first position with a predetermined retaining force, second retaining means for positionally fixing said second engagement member to said second position with a predetermined retaining force, and turn resisting means for restricting relative turning motion of said first and second engagement members between said first position and said second position with a predetermined resisting force,
said second hinge member of said first hinge part and said second engagement member of said second hinge part being non-turnably connected together, and
the retaining force of said first retaining means for positionally fixing said first engagement member to said first position being set to be larger than the turn biasing force of said turn biasing means with respect to said second hinge member.

2. A hinge unit according to claim 1, wherein said turn biasing means includes movable member non-turnably disposed at said second hinge member but movable in the direction of said rotation axis, a first straight movement biasing member for biasing said movable member in the direction of said rotation axis toward said first hinge member, and first conversion means for converting the biasing force of said first straight movement biasing member to a turn biasing force for turning said movable member from said first position side toward said second position side.

3. A hinge unit according to claim 1, wherein said first retaining means includes a second straight movement biasing member for biasing said second engagement member in the direction of said rotation axis toward said first engagement member, and second conversion means for converting the turn biasing force of said second straight movement biasing means to a turn biasing force for turn biasing said first engagement member from said second position side toward said first position side when said first engagement member is located in a predetermined angle range from said first position toward said second position side.

4. A hinge unit according to claim 1, wherein said second retaining means includes a third straight movement biasing member for biasing said second engagement member in the direction of said rotation axis toward said first engagement member, and third conversion means for converting the biasing force of said third straight movement means to a turn biasing force for turn biasing said first engagement member from said first position side toward said second position side when said first engagement member is located in a predetermined angle range from said second position toward said first position side.

5. A hinge unit according to claim 1, wherein said turn biasing means includes movable member non-turnably disposed at said second hinge member but movable in the direction of said rotation axis, a first straight movement biasing member for biasing said movable member in the direction of said rotation axis toward said first hinge member, and first conversion means for converting the biasing force of said first straight movement biasing member to a turn biasing force for turning said movable member from said first position side toward said second position side, said first retaining means includes a second straight movement biasing member for biasing said second engagement member in the direction of said rotation axis toward said first engagement member, and second conversion means for converting the biasing force of said second straight movement biasing means to a turn biasing force for turn biasing said first engagement member from said second position side toward said first position side when said first engagement member is located in a predetermined angle range from said first position toward said second position side, and said second retaining means includes third straight movement biasing member for biasing said second engagement member in the direction of said rotation axis toward said first engagement member, and third conversion means for converting the biasing force of said third straight movement means to a turn biasing force for turn biasing said first engagement member from said first position side toward said second position side when said first engagement member is located in a predetermined angle range from said second position toward said first position side, and said first straight movement biasing member, said second straight movement biasing member and said third straight movement biasing member are mutually commonly used.

6. A foldable portable cellular telephone in which a transmission section and a reception section are turnably connected together between a folding position and a talking position through a hinge unit, wherein
said hinge unit comprises a first and a second hinge part arranged, side by side, on a rotation axis of said transmission section and said reception section,
said first hinge part includes a first hinge member arranged on said rotation axis and non-turnably connected to one of said transmission section and said reception section, a second hinge member arranged on said rotation axis and relatively turnable between said folding position and said talking position with respect to said first hinge member, turn biasing means for turn biasing said second hinge member from said folding position to said talking position with respect to said first hinge member, lock means for locking said second hinge member to said folding position, and lock releasing means for releasing the locked state caused by said lock means with respect to said second hinge member,
said second hinge part includes a first engagement member arranged on said rotation axis and turnably connected to the other of said transmission section and said reception section, a second engagement member arranged on said rotation axis in opposing relation to said first engagement member and turnable with respect to said transmission section and said reception section, first retaining means for positionally fixing said first engagement member to said folding position with a predetermined retaining force, second retaining means for positionally fixing said second engagement member to said talking position with a predetermined retaining force, and turn resisting means for restricting relative turning motion of said first and second engagement members between said folding position and said talking position with a predetermined resisting force,
said second hinge member of said first hinge part and said second engagement member of said second hinge part being non-turnably connected together, and
the retaining force of said first retaining means for positionally fixing said first engagement member to said folding position being set to be larger than the turn biasing force of said turn biasing means with respect to said second hinge member.

7. A foldable portable cellular telephone according to claim 6, wherein said turn biasing means includes movable member non-turnably disposed at said second hinge member but movable in the direction of said rotation axis, a first straight movement biasing member for biasing said movable member in the direction of said rotation axis toward said first hinge member, and first conversion means for converting the biasing force of said first straight movement biasing member to a turn biasing force for turning said movable member from said first position side toward said second position side.

8. A foldable portable cellular telephone according to claim 6, wherein said first retaining means includes a second straight movement biasing member for biasing said second engagement member in the direction of said rotation axis toward said first engagement member, and second conversion means for converting the turn biasing force of said second straight movement biasing means to a turn biasing force for turn biasing said first engagement member from said talking position side toward said folding position side when said first engagement member is located in a predetermined angle range from said folding position toward said talking position side.

9. A foldable portable cellular telephone according to claim 6, wherein said second retaining means includes a third straight movement biasing member for biasing said second engagement member in the direction of said rotation axis toward said first engagement member, and third conversion means for converting the biasing force of said third straight movement means to a turn biasing force for turn biasing said first engagement member from said folding position side toward said talking position side when said first engagement member is located in a predetermined angle range from said talking position toward said folding position side.

10. A foldable portable cellular telephone according to claim 6, wherein said turn biasing means includes movable member non-turnably disposed at said second hinge member but movable in the direction of said rotation axis, a first straight movement biasing member for biasing said movable member in the direction of said rotation axis toward said first hinge member, and first conversion means for converting the biasing force of said first straight movement biasing member to a turn biasing force for turning said movable member from said folding position side toward said talking position side, said first retaining means includes a second straight movement biasing member for biasing said second engagement member in the direction of said rotation axis toward said first engagement member, and second conversion means for converting the biasing force of said second straight movement biasing means to a turn biasing force for turn biasing said first engagement member from said talking position side toward said folding position side when said first engagement member is located in a predetermined angle range from said folding position toward said talking position side, and said second retaining means includes third straight movement biasing member for biasing said second engagement member in the direction of said rotation axis toward said first engagement member, and third conversion means for converting the biasing force of said third straight movement means to a turn biasing force for turn biasing said first engagement member from said folding position side toward said talking position side when said first engagement member is located in a predetermined angle range from said talking position toward said folding position side, and said first straight movement biasing member, said second straight movement biasing member and said third straight movement biasing member are mutually commonly used.
